# EUROPEAN PATENT APPLICATION

(11) **EP 2 597 765 A2**
(43) Date of publication of application: **29.05.2013**
(21) Application number: 11809896.1
(22) Date of filing: 22.07.2011
(51) Int. Cl.: H02M 1/44, H02M 1/12

(54) **DEVICE FOR IMPROVING POWER QUALITY**

(30) Priority: 23.07.2010 KR 20100071415
(71) Applicant: Surge Lab Korea Co., Ltd., Daejeon metropolitan city 306-813 (KR); Kim, Seonho, Daejeon 301-030 (KR)
(72) Inventor: KIM, Seon Ho, Daejeon Metropolitan City 301-030 (KR)
(74) Representative: Gille Hrabal
(86) International application number: PCT/KR2011/005413
(87) International publication number: WO 2012/011769

(57) **Abstract**

A device for improving power quality of the present invention, which is installed on a power line, for removing noise that flows into the power line, characterized by: a reactor having a first coil and a second coil wound on a core disposed between the input end and the output ends of the power line, wherein in the reactor, the first end of the first coil is connected to the input end of a first power line, the second end of the first coil is connected to the output end of the first power line, and the first end of the second coil is connected to the output end of the second power line, and the second end of the second coil is connected to the input end of the second power line.

## Description

### Technical Field

The invention relates to a device for improving a power quality, and more particularly to a technology for improving a power quality capable of passing a commercial power of 50 ∼ 60Hz through a simple reactor structure without a loss and effectively blocking noise components such as a surge component, a flicker, a notch component, a harmonic component etc. included in a power circuit.

### Background Art

In the power stabilization circuit for the purpose of the stable operation of the power line, it is known to obtain the effects such as a noise removing of various EMI/EMC level included in the power line, a harmonic component removal, or a correction about a phase etc. using a noise filter or a phase advance capacitor.

In order to improve the problem of the noise filter used in the conventional power stabilization circuit, the applicant has been applied for a patent and got a patent as Korean Patent No 10-882856 on a power stabilizing circuit in that a function of removing a high frequency noise is usually maintained in the power line like a general noise filter, an insulation is maintained in the circuits other than the noise filter, a voltage is limited in a limit portion on a switching of exceeding a set range of the voltage limit level, any noise having all kinds of the large electric power elements including a starting noise of a motor, and an inflow of the surge impulse, and then the only overflowed components are charged in a storage battery and the remainder is dissipated through the discharging part.

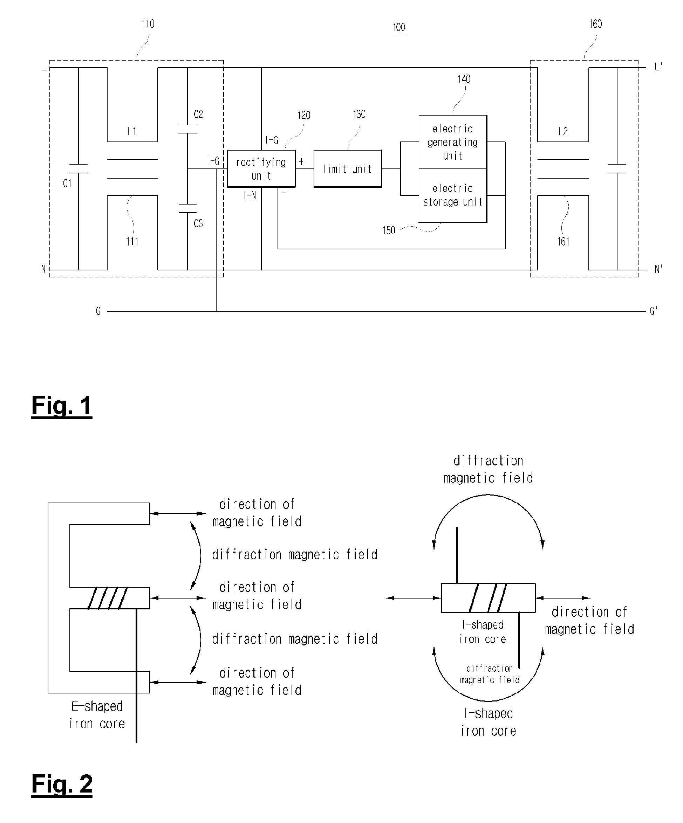

As shown in FIG. 1, the power stabilizing circuit according to the registered patent includes a capacitor C1 connected to at least two power line and a ground and formed between two power lines among all sets selected in at least two power lines, a reactor L1 connected to a rear end of the capacitor between the two power lines and connected to one of the power lines in series, capacitors C2 and C3 connected to a rear end of the reactor and formed between the power lines and a ground line, a rectifying unit 120 connected to rear ends of the capacitors between the power lines and the ground line and connected to the power lines and the ground line to rectify voltage, a limit unit 130 connected to a positive terminal of the rectifying unit in series to limit the voltage, a storage unit 150 of connecting an output of the limit unit and a negative terminal of the rectifying unit and charges electric charges, and an electric generating unit 140 connected to the storage unit in parallel.

FIG. 2 is a conceptual diagram illustrating an operation of a reactors (L1 or the L2, and 111 or 161) of FIG. 1.

As shown in FIG. 2, in the reactors L1 or L2 and 111 or 161 of the registered patent, the coils are wound on an E-shaped core or an I-shaped core. Although a commercial alternating current of 60HZ or a current of a switching power supply (called as 60Hz component hereinafter) having several hundred Hz is flowed into the coil, since there is no loop in which the magnetic flux flows into the core, the sufficient reactance component is not generated in the coil.

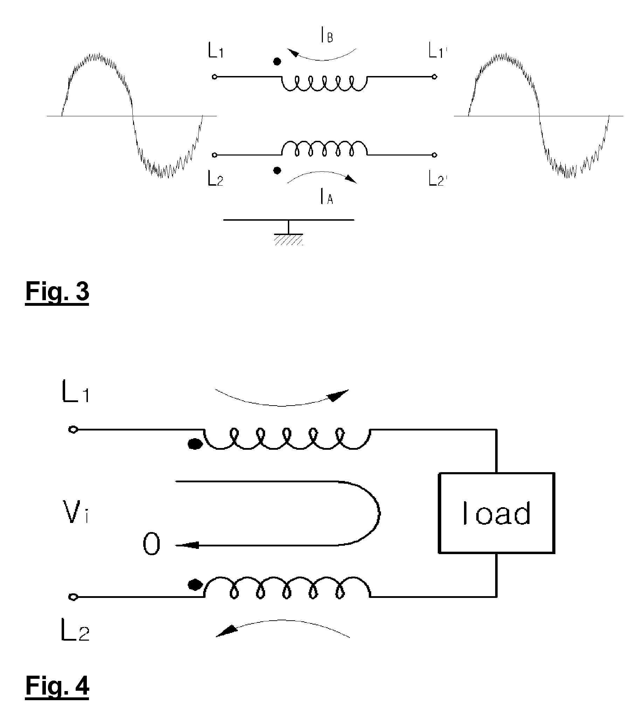

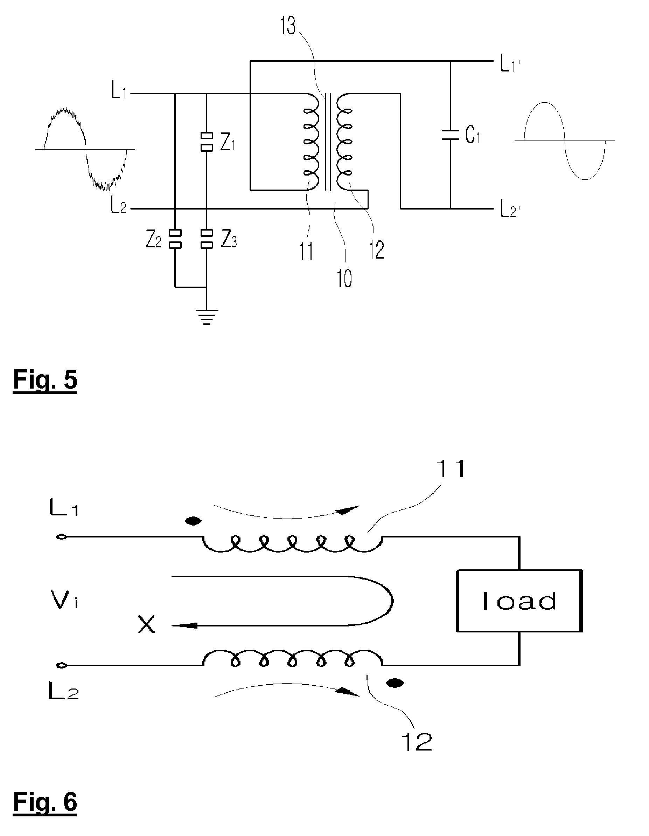

However, if the powerful switching noise is flowed in the circuit to operate the voltage limiting device (Z of FIG. 5) of the limit unit 120 and the large charging current is flowed into the capacitor (C4 of FIG. 5) of the electric storage unit 150, the current of the hundreds through the thousands ampere is rushed into the core of the reactor (L1 of FIG. 3; 111) based on the strong rush current, which is charged into the capacitor (C4 of FIG. 5) of the electric storage unit 150.

Where the design capacity of the reactor (L1 or L2; 111 or 161) is 60Hz commercial alternating current 10A level, since the magnetic flux does not have the flow owing to the reactor structure of the present invention, in which the magnetic path was not connected in the core, in normal times in that the current is flowed within 10A, the applicant was judged that it cannot play the reactor and the transformer roles. Meanwhile, if the strong current of the dozens through the hundreds ampere of exceeding the design capacity is flowed therein, since the powerful magnetic flux and the reactance due to the powerful magnetic flux are generated through the flow of the magnetic flux by the diffraction loop, the applicant was judged that it cannot play the reactor role.

However, as a result of a continuous experiment after the filing thereof, it discovered that the rotating field is easily generated even in a low current in a case that the high frequency component is included therein.

FIG. 3 and FIG. 4 are circuit diagrams for illustrating a problem of the reactor of the conventional power stabilizing circuit.

Referring to FIG. 3, in case of the reactor connected between the power line L1 and L2, two coils are wound in such a manner that the input ends thereof and output end thereof are coincided with each other. At this time, since it cannot play the reactor role in the low frequency of 60Hz, the signal of the power line can be outputted without the loss thereof. Especially, where the terrestrial current I_{A} is generated between a L2 line and a ground owing to the electric potential difference between the ground and the power line, the current I_{B} of a backward direction is generated in the wound wire of the line side of L1, so that both currents is offset, thereby it can shut off the noise.

However, referring to FIG. 4, where the high frequency signal is introduced into the power line, the current of the backward direction is generated in the L2 line. Accordingly, the current loop is formed between the L1, the load, so that all of the introduced high frequency signals are applied to the load, thereby losing the function as the noise filter.

### Disclosure

### Technical Problem

Accordingly, the present invention has been made to solve the above-mentioned problems occurring in the prior art, and an object of the present invention is to provide a device for improving a power quality in that it does not play the role in a commercial power, meanwhile, it plays the reactor role in noise signals including a surge component, a flicker, a notch component, and a harmonic component, thereby effectively removing the noise components.

### Technical solution

In order to accomplish this object, there is provided a device for improving a power quality installed on a power line for removing a noise flowing into the power line, characterized by: a reactor having a first coil and a second coil wound on a core disposed between an input end and an output end of the power line, wherein in the reactor, a first end of the first coil is connected to an input end of a first power line, a second end of the first coil is connected to an output end of the first power line, and a first end of the second coil is connected to an output end of the second power line, and a second end of the second coil is connected to an input end of the second power line.

Preferably, the power line is a three phase power line, the first and second coils are wound on three cores respectively in the reactor, the first ends of each first coil are connected to the input ends of R, S, and T phase respectively, the second ends of the first coil are connected to the output ends of the R, S, and T phase respectively, the first ends of each second coil are connected to the output end of the N phase, and the second ends of each second coil are connected to the input end of the N phase.

Preferably, an earth ground E is further selectively formed at the output end N' of the N phase connected to the first end of the second coil.

Preferably, a capacitance can be further formed between the output end (L1'-L2') of the power line and in case of three phase, another capacitance can be further formed between each phase of the output ends R', S', and T' of the R, S, and T phase or between each phase of the output ends R', S', and T' and the output end N' of the N phase.

### Advantageous Effects

According to the device for improving the power quality, there is an effect in that it can effectively block the noise components such as the surge component, the flicker, the notch component, the harmonic component etc. by using the reactor having very simple structure, thereby improving the power quality at low cost.

### Brief Description of the Drawings

The above and other objects, features and advantages of the present invention will be more apparent from the following detailed description taken in conjunction with the accompanying drawings, in which:
FIG. 1 is a circuit diagram of a power stabilizing circuit equipped with a noise filter according to the prior art;
FIG. 2 is a conceptual diagram illustrating an operation of a reactors (L1 or the L2, and 111 or 161) of FIG. 1;
FIG. 3 and FIG. 4 are circuit diagrams for illustrating a problem of the reactor of the conventional power stabilizing circuit;
FIG. 5 is a circuit diagram of the device for improving a power quality according to the invention;
FIG. 6 is a circuit diagram for explaining the removal principles of the reactor according to the present invention;
FIG. 7a through FIG. 7d are example views illustrating the iron core structure of the reactor according to the present invention; and
FIG. 8a through FIG. 8c are example views illustrating the iron core structure and the coil winding structure in three phase type and coil winding structure.

### <Descriptions on reference numbers for the major components in the drawings>

10: reactor 11: first coil.
12: second coil 13: core.
Z1 ∼ Z3: surge protecting element.

### Best Mode

### Mode for Invention

Hereinafter, an exemplary embodiment of the present invention will be described in detail with reference to the accompanying drawings.

In the following description, the noise means any noise of all kinds of EMI/EMC level included in the power circuit, in which a commercial power is flowed. Also, the noise means any noise means a widespread noise etc. included in a surge component, a flicker element, a notch component, a harmonics component, and a PWM waveform of an inverter output. An open circuit iron core means any core in which a magnetic field closed loop is not formed.

FIG. 5 is a circuit diagram of the device for improving a power quality according to the invention.

Referring to FIG. 5, the device for improving the power quality according to the present invention includes a reactor 5 disposed between a power line and a load and a surge protecting element (Z1 ∼ Z3) connected between the power line and the ground.

A common mode reactor, in which two coils 11 and 12 are wound on a core 13, is utilized as the reactor 10. Here, the core 13 may be a silicon steel stacked core used in a reactor for the commercial power. The form of the core 13 will be described in detail hereinafter.

In the reactor of the present invention, a first end (the upper portion of the coil in drawing) of the first coils is connected to the input end L1 of a first power line, a second end of the first coil 11 is connected to the output end L1' of the first power line, and the first end of the second coil 12 is connected to an output end L2' of the second power line, and the second end of the second coil 12 is connected to the input end L2 of the second power line. That is, it is characterized in that two coils are wound in such a manner that the polarities thereof are opposed to each other,

FIG. 6 is a circuit diagram for explaining the removal principles of the reactor according to the present invention.

Firstly, the prior condition for the noise component removal according to the present invention will be described prior to the description of FIG. 6.
1. Since the surge protecting elements (Z1 ∼ Z3) are used in the input end of the power line, the power of acting between the ground and the line is not great. That is, the terrestrial current owing to the capacitance between the ground and the power line is not nearly generated.
2. Where the magnetic path of the silicon steel stacked core 13 is opened, a frequency of 50 ∼ 60Hz, which is a frequency of the general commercial power, does not affect the reactor. That is, the magnetic path such is opened in a "-" shape iron core, an "E" shape open circuit iron core, and a gap type open circuit core of an "EI" shape described later, so that the low frequency component is unable to form the rotating field in the iron core, in which the magnetizing circuit is not formed, thereby the reactor 10 comes to a short state.
3. In the power line which supplies the commercial electricity of 50 ∼ 60Hz, the component frequency beyond 50 ∼ 60Hz is the removal object as the noise. Conventionally, the frequency of the removal object component is high.

Referring to FIG. 6, since the polarities of two coils are opposed to each other, if the first current of the high frequency component is flowed into the first coil 11 in the arrow direction, the direction of the secondary current, which is induced by the first current, disturbs the flow of the first current in the second coil 12, thereby the current is unable to flow.

More concretely, in case of the open circuit type silicon iron core, if the first current is flowed in the direct current or the frequency of 50 ∼ 60 Hz, since the size of the induced second current is minuscule, the primary current normally flows to the load.

Meanwhile, as described above, in case of the noise having the high frequency component, since the rotating magnetic field is easily generated through the open circuit type silicon iron core, the second current is induced by the first current and the directions of both currents are opposed to each other, thereby the high frequency noise component is unable to flow to the load. Accordingly, the noise is effectively removed.

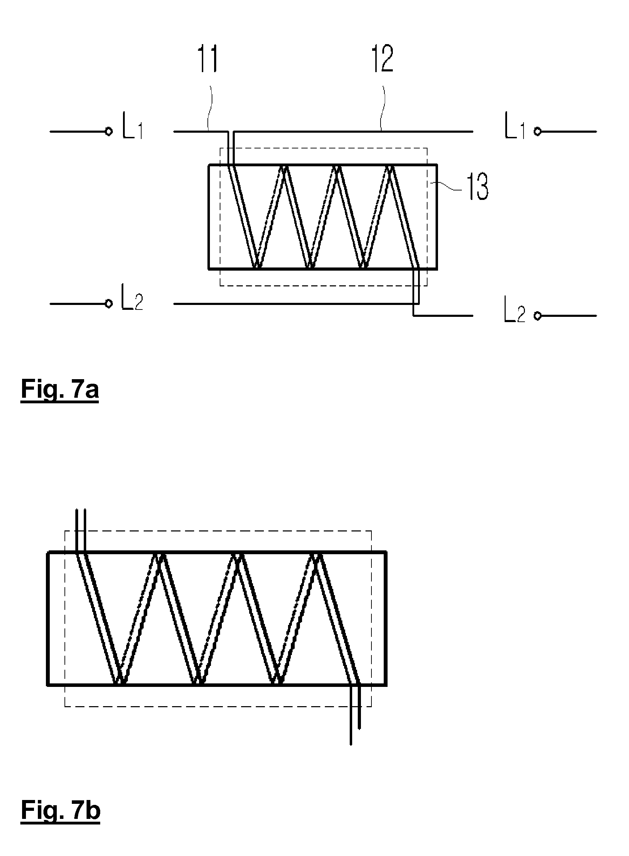

FIG. 7a through FIG. 7d are example views illustrating the iron core structure of the reactor according to the present invention.

As shown in FIG. 7a, the first and second coils 11 and 12 are wound on the silicon iron plate core 13 of the "-" shape in such a manner that the polarities thereof are opposed to each other. The first end (the left portion of the coil in drawing) of the first coil is connected to the input end L1 of a first power line, a second end of the first coil 11 is connected to the output end L1' of the first power line, and the first end of the second coil 12 is connected to an output end L2' of the second power line, and the second end of the second coil 12 is connected to the input end L2 of the second power line.

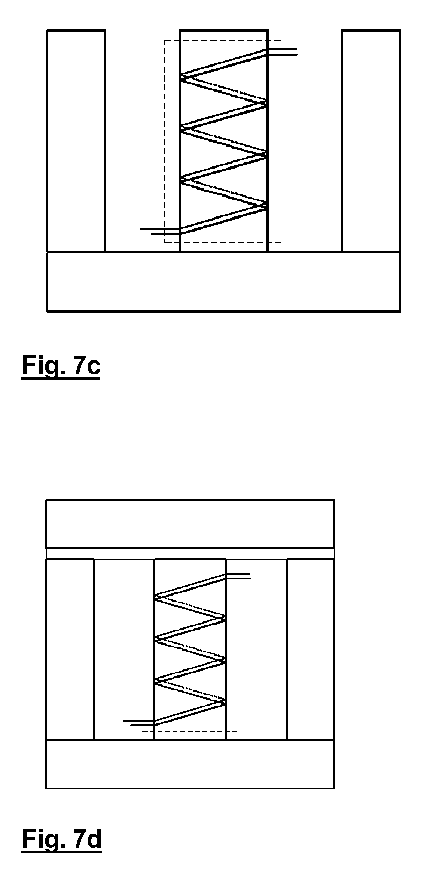

In case of the core construction, as shown in FIG. 7b, the iron cores of various types such as the coreless type of FIG. 7b, the "E" shape open circuit iron core of FIG. 7c, and the gap type open circuit core of the "EI" shape of FIG. 7d etc., which are not form the magnetic field closed loop, can be used.

In the winding methods of the coil, there are 1) a method of winding two lines at the same time, 2) a divisionally winding method of firstly winding the first coil 11 and then, winding the second coil 12 on the rear end thereof, and 3) a method of divisionally winding a plurality of thin lines etc.

Here, the first method 1) has an advantage in that the impedances of two lines are identical with each other. The second method 2) has an advantage in that the dielectric strength between two wires is superior. In the third method 3), after several fine lines are gathered to constitute one coil, they are wound with the second method, thereby the skin effect of the conducting wire is reduced and the workability thereof is good.

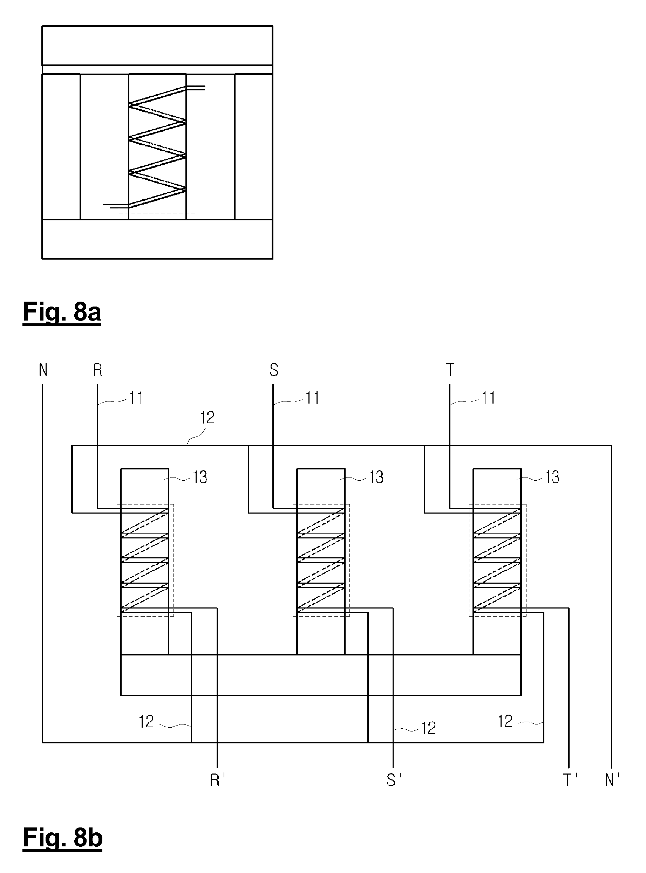

FIG. 8a through FIG. 8c are example views illustrating the iron core structure and the coil winding structure in three phase type and coil winding structure.

FIG. 8a through FIG. 8c illustrate the coil winding structure of the reactor applied to the three phase power line. As shown, in the reactor, the first and second coils are wound on three cores. The first ends (the upper portion of the coil in drawing) of each first coil are connected to the input ends R, S, and T of the R, S, and T phase respectively, the second ends of the first coil 11 are connected to the output ends R', S', and T' of the R, S, and T phase respectively, the first ends of each second coil are connected to the output end of the N phase, the second ends of each second coil are connected to the input end of the N phase, and the ground is connected to the output end of the N phase.

Here, the N phase of three-phase power source having R, S, and T and N phase is connected to the neutral conductor of the transformer. According to the Electrical Equipment Technical Standard, to add the reactance to the specific part of the N phase in the power supply system is violated to the standard on account of the stop of the return circuit when the fault current is generated. Accordingly, it is characterized in that the ground E is selectively connected to the output end N' of the N phase, which is connected to the first end of the second coil.

In case of the single-phase power, it is provided with power line L1 and L2 by means of any one among the R, S, and T phase and the N phase. Further description on this is omitted here.

Also, the capacitance C can be further formed between the output end (L1'-L2') of the power line. Moreover, it is characterized in that the capacitance is further formed between each phase of the output ends R', S', and T' of the R, S, and T phase or between each phase of the output ends R', S', and T' and the output end N' of the N phase. At this time, in the configuration of the capacitance, it may be the condenser for the alternating current or the conventional condenser for the direct current assembled with the bridge diode as described above.

Since the operation of the reactor in three phase power line is identical with the embodiment, further description on this is omitted here.

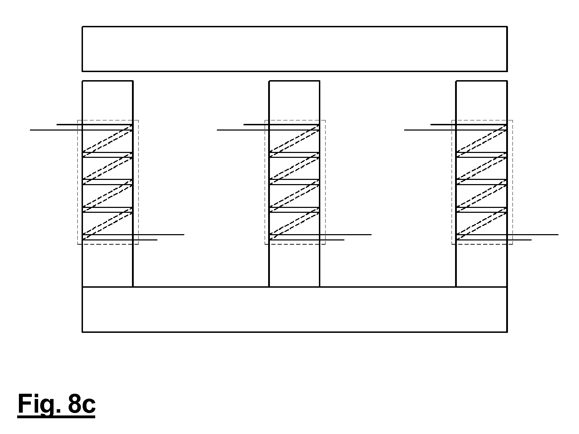

In the iron core construction of the three phase type, iron cores of various types such as the "-" shape core of FIG. 8a, the "E" shape open circuit iron core of FIG. 8b, and the gap type open circuit core of the "EI" shape of FIG. 8c etc., which are not form the magnetic field closed loop, can be used.

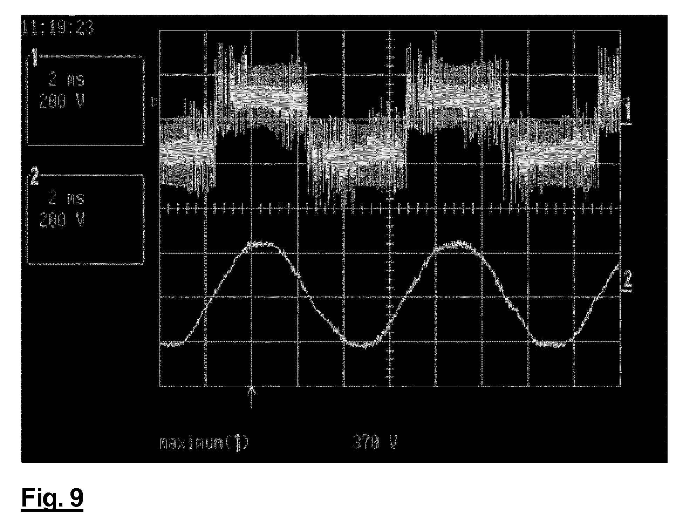

FIG. 9 is a survey waveform of illustrating an example of removing the wide range noise component 1 included in the PWM waveform of the inverter output and attempting a conversion into a complete sine wave 2 using the device for improving the power quality according to the present invention of FIG. 5. As shown in FIG. 5 illustrating a quite simple circuit, in the open circuit iron core having about 60Hz component as the commercial frequency, it shows a slight loss. Also, it shows an excellent removing ability on the noise component. Accordingly, it shows that the invention is new and a great step forward.

### Industrial Applicability

The invention relates to a technology for improving a power quality capable of passing a commercial power of 50 ∼ 60Hz through a simple reactor structure without a loss and effectively blocking noise components such as a surge component, a flicker, a notch component, a harmonic component etc. included in a power circuit.

## Claims

1. A device for improving a power quality installed on a power line for removing a noise flowing into the power line, **characterized by**: a reactor having a first coil and a second coil wound on a core disposed between an input end and an output end of the power line, wherein in the reactor, a first end of the first coil is connected to an input end of a first power line, a second end of the first coil is connected to an output end of the first power line, and a first end of the second coil is connected to an output end of the second power line, and a second end of the second coil is connected to an input end of the second power line.

2. A device for improving a power quality as recited in claim 1, wherein, the power line is a three phase power line, the first and second coils are wound on three cores respectively in the reactor, the first ends of each first coil are connected to the input ends of R, S, and T phase respectively, the second ends of the first coil are connected to the output ends of the R, S, and T phase respectively, the first ends of each second coil are connected to the output end of the N phase, and the second ends of each second coil are connected to the input end of the N phase.

3. A device for improving a power quality as recited in claim 2, wherein an earth ground E is further selectively formed at the output end N' of the N phase connected to the first end of the second coil.

4. A device for improving a power quality as recited in claims 1 or 2, wherein a capacitance is further formed between the output end (L1'-L2') of the power line.

5. A device for improving a power quality as recited in claim 2, wherein a capacitance is further formed between each phase of the output ends R', S', and T' of the R, S, and T phase or between each phase of the output ends R', S', and T' and the output end N' of the N phase.
